# EUROPEAN PATENT APPLICATION

(11) **EP 4 790 390 A2**
(43) Date of publication of application: **12.08.2026**
(21) Application number: 26187488.7
(22) Date of filing: 10.09.2021
(51) Int. Cl.: G01N 21/65

(54) **SURFACE-ENHANCED RAMAN SCATTERING AGENT**

(30) Priority: 14.09.2020 JP 2020153721
(62) Document number(s) of the earlier application(s) in accordance with Art. 76 EPC: 21866864.8 / 4 212 855
(71) Applicant: Daicel Corporation, Osaka-shi, Osaka 530-0011 (JP)
(72) Inventor: Suzuki, Motofumi, Kyoto, 606-8501 (JP); Kanagawa, Misa, Kyoto, 606-8501 (JP); Namura, Kyoko, Kyoto, 606-8501 (JP); Fukuoka, Takao, Kyoto, 606-8501 (JP); Samir, Kumar, Kyoto, 606-8501 (JP)
(74) Representative: Grünecker Patent- und Rechtsanwälte PartG mbB

(57) **Abstract**

The present disclosure provides a surface-enhanced Raman scattering agent that enables highly sensitive quantification using Raman spectroscopy and that can be used in various uses. The surface-enhanced Raman scattering agent of the present disclosure contains a viscous liquid having a viscosity of 50 mPa·s or greater at 25°C and a shear rate of 10 (1/s), and noble metal-supporting flakes dispersed in the viscous liquid. The noble metal in a noble metal layer and noble metal particles is preferably gold, silver, or copper. The noble metal-supporting flakes are preferably structures in which surfaces of flakes bristle with nanorods and at least a part of the nanorods are formed of a noble metal layer or noble metal particles.

## Description

### Technical Field

The present disclosure relates to a surface-enhanced Raman scattering agent, a method of performing quantification by Raman spectroscopy using the surface-enhanced Raman scattering agent, and a kit for performing the quantification. The present disclosure claims priority to JP 2020-153721 filed in Japan on September 14, 2020, the content of which is incorporated herein.

### Background Art

Raman spectroscopy is an analysis method for identifying a substance based on the spectrum of scattered light generated when the substance is irradiated with light. However, Raman spectroscopy has low sensitivity.

Therefore, in recent years, studies have been actively conducted on surface-enhanced Raman scattering methods in which sensitivity is improved by amplifying Raman scattering by an enhancement effect of a local electric field generated when local plasmons of a noble metal component such as Au or Ag are excited.

Further, Patent Document 1 describes a surface-enhanced Raman scattering substrate in which silica coated with a metal is stacked on a surface of a glass substrate. According to the description, when a specimen is placed on the substrate and analyzed using Raman spectroscopy, an effect of enhanced Raman scattering can be achieved, and measurement can be performed with high sensitivity.

Non-Patent Document 1 describes a surface-enhanced Raman scattering agent having nanorods fabricated on a flexible sheet using glancing angle deposition. Further, Non-Patent Document 2 describes a surface-enhanced Raman scattering agent in which a noble metal nanostructure is supported on nanocellulose.

### Citation List

### Patent Document

Patent Document 1: JP 2004-170334 A

### Non-Patent Literature

Non-Patent Document 1: K. Xu, R. Zhou, K. Takei, and M. Hong, Adv. Sci., 2019, 1900925.
Non-Patent Document 2: J. Chen, M. Huang, L. Kong, and M. Lin, Carbonhydr. Polymn., 205, 516 (2019).

### Summary of Invention

### Technical Problem

However, the surface-enhanced Raman scattering substrate described in Patent Document 1 has limited use. For example, even if an attempt is made to measure a biomarker directly on the skin surface or the like of a subject, the surface-enhanced Raman scattering substrate, which is hard and rigid and lacks flexibility, can not conform to the inspection site, and the surface-enhanced Raman scattering effect cannot be achieved. It is also difficult to perform surface-enhanced Raman scattering measurement by fixing the surface-enhanced Raman scattering substrate along a non-flat surface of a Raman measurement device with a specimen collection function (for example, a curved surface of a toilet, a potty, or the like).

In addition, although having flexibility as compared with the surface-enhanced Raman scattering substrate described in Patent Document 1, the surface-enhanced Raman scattering agents described in Non-Patent Documents 1 and 2 still have limited use.

As such, an object of the present disclosure is to provide a surface-enhanced Raman scattering agent that enables highly sensitive quantification using Raman spectroscopy and that can be applied to various usages.

Another object of the present disclosure is to provide a surface-enhanced Raman scattering agent that can be brought into close contact with the skin surface of a subject or immobilized on a Raman measurement device with a specimen collection function to perform surface-enhanced Raman scattering measurement directly.

Another object of the present disclosure is to provide a surface-enhanced Raman scattering measurement kit that can be applied to various measurement methods.

Yet another object of the present disclosure is to provide a surface-enhanced Raman scattering measurement method using the surface-enhanced Raman scattering agent.

Still another object of the present disclosure is to provide a method for producing the surface-enhanced Raman scattering agent.

### Solution to Problem

As a result of conducting intensive studies to solve the above problems, the present inventors found the following. A surface-enhanced Raman scattering substrate, in which a surface-enhanced Raman scattering agent is immobilized on a glass substrate, exhibits rigidity and lacks flexibility; in comparison, a viscous dispersion, obtained by dispersing flakes that have a noble metal layer and/or noble metal particles on a surface in a viscous liquid, has flexibility or fluidity, and thus such viscous dispersion can be applied to various usages. With the use of the viscous dispersion, the local electric field generated when local plasmons are excited is significantly enhanced, thereby dramatically increasing the enhancement effect of Raman scattered light. This improves the sensitivity of Raman spectroscopy and enables trace quantification. The present disclosure has been completed based on these findings.

That is, the present disclosure provides a surface-enhanced Raman scattering agent containing a viscous liquid having a viscosity of 50 mPa·s or greater at 25°C and a shear rate of 10 (1/s), and noble metal-supporting flakes dispersed in the viscous liquid.

The present disclosure also provides the surface-enhanced Raman scattering agent, wherein the noble metal is gold, silver, or copper.

The present disclosure also provides the surface-enhanced Raman scattering agent, wherein
each of the noble metal-supporting flakes is a structure including:
a flake; and
nanorods standing close together on a surface of the flake, where at least a part of the nanorods comprises a noble metal layer or a noble metal particle.

The present disclosure also provides the surface-enhanced Raman scattering agent, wherein the flakes are made of an inorganic oxide having a hydroxyl group.

The present disclosure also provides the surface-enhanced Raman scattering agent, wherein the flakes are glass flakes, silica flakes, talc flakes, mica flakes, or titanium oxide flakes.

The present disclosure also provides a surface-enhanced Raman scattering measurement kit including the surface-enhanced Raman scattering agent.

The present disclosure also provides a surface-enhanced Raman scattering measurement method, the method including performing surface-enhanced Raman scattering measurement using the surface-enhanced Raman scattering agent.

The present disclosure also provides a method for producing the surface-enhanced Raman scattering agent, the method including pulverizing a noble metal-supporting sheet in a viscous liquid having a viscosity of 50 mPa·s or greater at 25°C and a shear rate of 10 (1/s).

### Advantageous Effects of Invention

The surface-enhanced Raman scattering agent according to an embodiment of the present disclosure has flexibility or fluidity, and also has adhesiveness. Therefore, the surface-enhanced Raman scattering agent according to an embodiment of the present disclosure can be applied to various usages. For example, the surface-enhanced Raman scattering agent according to an embodiment of the present disclosure is attached to a potty for toddlers, a toilet bowl, or the like, and urine is discharged while being in contact with the surface-enhanced Raman scattering agent, resulting in a test specimen. When a surface-enhanced Raman scattering spectrum is acquired from the test specimen obtained in this manner, a component in the urine can be measured. When the surface-enhanced Raman scattering agent is used, the Raman scattered light generated by an analyte can be significantly amplified. Thus, the analyte can be identified and/or quantified with good sensitivity.

When the surface-enhanced Raman scattering agent is used, a characteristic Raman peak of equol can be recognized with high sensitivity. As such, even in a specimen in which equol and an equol-like substance are mixed, equol and the equol-like substance can be distinguished from each other, and equol in the specimen can be selectively quantified with high sensitivity.

Therefore, when the surface-enhanced Raman scattering agent is used, the presence of equol-producing ability can be determined conveniently and with high accuracy by measuring the concentration of equol contained in the urine, blood, or the like of a subject, making the surface-enhanced Raman scattering agent useful for examining the presence of equol-producing ability as well.

### Brief Description of Drawings

FIG. 1 is a typical surface-enhanced Raman scattering spectrum of 4,4'-bipyridine obtained using the surface-enhanced Raman scattering agent according to an embodiment of the present disclosure.
FIG. 2 is a graph showing the relationship between the mixing time in the preparation stage of the surface-enhanced Raman scattering agent and the peak height around 1600 cm⁻¹ resulted from using the surface-enhanced Raman scattering agent.
FIG. 3 is a graph illustrating a Raman spectrum obtained by performing surface-enhanced Raman scattering measurement of 4,4'-bipyridine using a gelatinous dispersion containing colloidal gold.

### Description of Embodiments

### Surface-enhanced Raman scattering agent

A surface-enhanced Raman scattering agent according to an embodiment of the present disclosure contains a viscous liquid and noble metal-supporting flakes dispersed in the viscous liquid. The viscous liquid has a viscosity of 50 mPa·s or greater at 25°C and a shear rate of 10 (1/s).

The surface-enhanced Raman scattering agent has a configuration in which the noble metal-supporting flakes are dispersed in the viscous liquid.

The surface-enhanced Raman scattering agent contains at least the noble metal-supporting flakes and the viscous liquid, and may further contain one or more types of other components. Examples of the other components include a thickener, a surfactant, a dispersion stabilizer (for example, citric acid), a pH adjuster (for example, toluene, xylene, or hydrochloric acid), a preservative (for example, neutral formalin, sodium azide, thymol, or an isothiazolone compound), a deodorant, and an aromatic.

The surface-enhanced Raman scattering agent is particularly preferably a gelatinous dispersion from the viewpoint of improving the surface-enhanced Raman scattering effect by bringing the noble metal-supporting flakes into contact with an analyte at a high concentration and maintaining such a contact state.

The viscosity of the surface-enhanced Raman scattering agent at 25°C and a shear rate of 10 (1/s) is, for example, from 50 to 100000 mPa·s, preferably from 100 to 50000 mPa·s, and particularly preferably from 200 to 30000 mPa·s.

Note that the viscosity can be measured using a viscosity/viscoelasticity measuring instrument (rheometer, trade name "RheoStress 600", available from HAAKE).

With the surface-enhanced Raman scattering agent, the intensity of the Raman scattered light is amplified by the interaction between the Raman scattered light and electromagnetic waves on surfaces of noble metal structures. As such, even if the concentration of an analyte contained in a specimen is very small, the analyte can be quantified with high accuracy.

In general, the limit of the 4,4'-bipyridine concentration measurable by Raman spectroscopy is at most approximately 10 mmol/L. However, when the surface-enhanced Raman scattering agent according to an embodiment of the present disclosure is used, even if the content of 4,4'-bipyridine in a specimen is very small, 4,4'-bipyridine in the specimen can be quantified with high accuracy. When the surface-enhanced Raman scattering agent according to an embodiment of the present disclosure is used, for example, 4,4'-bipyridine in a concentration of 1 mmol/L can be measured.

The surface-enhanced Raman scattering agent also allows for highly sensitive measurement of equol. It is known that when an adult subject has equol-producing ability, the concentration of equol in urine is usually from 1 to 75 µmol/L. As such, by using the surface-enhanced Raman scattering agent to quantify equol contained in the urine of a subject, whether the subject has equol-producing ability can be easily determined.

### Noble metal-supporting flakes

The noble metal-supporting flakes (noble metal-bearing flakes) are each a structure including a flake, and a noble metal component attached to a surface of the flake.

The average thickness of the flakes is, for example, from 10 to 50 µm. The average thickness of the flakes is determined by dividing the weight of the flakes by the density to find the volume, and then dividing the volume by the area of the flakes.

The average value of circle equivalent diameters (measured by an image analysis method) of the flakes is, for example, from 10 to 500 µm, and preferably from 20 to 50 µm.

The surfaces of the flakes may be flat, or may be mechanically or chemically treated.

The flakes are preferably made of an inorganic oxide having a hydroxyl group, and examples of the flakes include silica flakes, talc flakes, mica flakes, titanium oxide flakes, and glass flakes. Among them, the flakes are preferably mica flakes. This is both because mica can be easily crushed into flakes and because mica functions as an internal standard for surface-enhanced Raman scattering.

The noble metal is preferably at least one selected from gold, silver, or copper.

The noble metal-supporting flakes are each preferably a structure having a noble metal layer on a surface of the flake, or a structure having noble metal particles on a surface of the flake, or a structure having both a noble metal layer and noble metal particles on a surface of the flake.

From the viewpoint of outstanding enhancement effect of Raman scattered light, the noble metal-supporting flakes are each preferably a structure including a flake and nanorods, where the nanorods stand close together on a surface of the flake and at least partially include a noble metal layer or a noble metal particle, more preferably a structure including a flake and nanorods, where the nanorods stand close together on a surface of the flake and have a noble metal layer, and particularly preferably a structure including a flake having a noble metal layer on a surface thereof, where, on a surface of the noble metal layer, nanorods having a noble metal layer stand close together.

The nanorods may be composed of noble metal particles, that is, rod-shaped noble metal particles; or, the nanorods may be objects in which a noble metal layer is stacked on a nanorod layer composed of a substance other than noble metals.

The noble metal-supporting flakes are each preferably a structure including a flake and nanorods, where the nanorods stand close together on a surface of the flake and each include a layer composed of a substance other than noble metals and a noble metal layer being stacked together.

The substance other than noble metals is preferably a transparent substance from the viewpoint of plasma resonance generated by light emitted from a light source. Examples of the transparent substance include SiO₂, Ta₂O₅, TiO₂, and LiF.

The section where the noble metal layer is provided may be at least one section of the nanorods, or may be the tips, the ends, or the central parts of the nanorods. In addition, the noble metal layer may be provided in only one section among the sections mentioned above, or may be provided in two or more sections.

The nanorods preferably stand perpendicularly to the surfaces of the flakes, but may also be slightly inclined with respect to the surfaces of the flakes. The interval between adjacent nanorods is preferably small enough that scattering of light emitted from a light source does not pose a problem. Adjacent nanorods may be in contact with each other.

In addition, the nanorods preferably exhibit an anisotropic shape from the viewpoint of outstanding enhancement effect of Raman scattered light. From the viewpoint of achieving a significant enhancement effect of Raman scattered light from the difference in transmission characteristics with respect to the optical axis direction of incident light, the anisotropic shape preferably has a ratio (aspect ratio) of the length in the longitudinal direction to the length in the widthwise direction of a cross session, created by cutting a nanorod along a plane substantially parallel to the flake, of 2 or more.

Further, the nanorods exhibiting an anisotropic shape on the surfaces of the flakes are preferably formed while being oriented in one direction.

A structure (1) includes a flake and nanorods standing close together on a surface of the flake, where the nanorods each have an anisotropic shape and have a stacked structure of a transparent layer and a noble metal layer. The structure (1) can be produced by, for example, producing a transparent layer having a nanorod shape on a sheet (preferably a sheet made of an inorganic oxide having a hydroxyl group), producing a noble metal layer on the sheet, and pulverizing the sheet. The order of the step of producing a transparent layer having a nanorod shape and the step of producing a noble metal layer can be selected, as appropriate, depending on the structure of the desired nanorods.

When the transparent layer and the noble metal layer are alternately stacked, the step of producing a transparent layer having a nanorod shape and the step of producing a noble metal layer may be alternately repeated.

### Production of transparent layer having nanorod shape

The present step is a step of forming a transparent layer having a nanorod shape. For example, in a case of forming a transparent layer having a nanorod shape directly on a sheet, the sheet is first tilted at approximately from 45° to 88° with respect to the incident direction of the flow of the transparent nanorod material to be deposited, and when a film having a thickness of from 5 to 100 nm is formed, the in-plane orientation of the sheet is flipped by 180°. This results in a sheet on which a transparent layer is formed, the transparent layer having an anisotropic shape that is elongated in a direction perpendicular to the surface of the sheet.

Note that, the sheet is a thin sheet-like object formed of the same material as that of the flakes, and the sheet becomes the flakes when pulverized.

### Production of noble metal layer

The present step is a step of stacking a noble metal layer. For example, in the case of stacking a noble metal layer on the transparent layer having a nanorod shape, a noble metal can be vapor-deposited on a side of the sheet with the transparent layer formed, the transparent layer being the transparent layer having a nanorod shape obtained through the previous step, at a deposition angle of from 45° to 88° from a direction orthogonal to the standing transparent layer. In this way, the noble metal can be vapor-deposited on the tips of the nanorod layer. In this way, nanorods in which the transparent layer and the noble metal layer are stacked can be formed.

The deposition of the noble metal may be performed while flipping the sheet in-plane as in the case of producing the transparent nanorod layer, or may be performed obliquely in only one direction without flipping in-plane.

The thickness of the noble metal layer can be selected, as appropriate, depending on the light source to be used, and is, for example, 50 nm or less.

Through the above-described steps, a structure (2) can be produced, where the structure (2) includes a sheet, and nanorods standing close together on a surface of the sheet, where the nanorods each have an anisotropic shape and have a transparent layer/noble metal layer stacked structure.

### Pulverization

This is a step of pulverizing the sheet portion of the structure (2) obtained through the above step. In this step, the structure is preferably pulverized in a viscous liquid from the viewpoint of being able to pulverize the sheet while maintaining the structure of the nanorods formed on the surface of the sheet.

The viscous liquid used in pulverization is preferably a viscous liquid that may be contained in the surface-enhanced Raman scattering agent, and particularly preferably a viscous liquid (particularly preferably a gelatinous dispersion) having a viscosity of from 50 to 100000 mPa·s at 25°C and a shear rate of 10 (1/s). This can mitigate the impact resulting from pulverization and improve the retention of the structure of the nanorods.

The pulverization time varies depending on the pulverization method. For example, when pulverization is performed by rotating stainless steel balls (SUS balls) with a diameter of 1.0 mm at a rotation speed of 2000 rpm for revolution and 800 rpm for rotation, the pulverization time is approximately from 1 to 10 minutes; of which, from the viewpoint of improving the surface-enhanced Raman scattering effect, the pulverization time is preferably from 4 to 9 minutes, and particularly preferably longer than 4 minutes and less than 6 minutes.

### Viscous liquid

The viscous liquid is a liquid having a viscosity of 50 mPa·s or greater at 25°C and a shear rate of 10 (1/s). The viscous liquid is preferably a liquid having a low Raman activity from the viewpoint of improving the accuracy of quantification of an analyte.

Specifically, the viscous liquid is preferably a gelatinous dispersion from the viewpoint of improving the surface-enhanced Raman scattering effect by bringing the noble metal-supporting flakes into contact with an analyte at a high concentration and maintaining such a contact state.

The viscous liquid includes a water-soluble solvent and an oil-based solvent. Specifically, the viscous liquid includes a solvent such as water, an alcohol, and an oil. One of these can be used alone or two or more in combination.

Examples of the alcohol include: alcohols such as methanol, ethanol, propanol, and butanol; and polyhydric alcohols such as ethylene glycol, propylene glycol, butylene glycol, and glycerin.

Examples of the oil include: hydrocarbon oils such as mineral oil and liquid paraffin; animal and plant oils such as sunflower oil, macadamia nut oil, avocado oil, almond oil, wheat germ oil, rice germ oil, olive oil, soybean oil, corn oil, castor oil, beef tallow, jojoba oil, evening primrose oil, coconut oil, camellia oil, rosehip oil, squalane, turtle oil, mink oil, egg yolk oil, lanolin, spermaceti, candelilla wax, montan wax, rice wax, lanolin wax, and shellac; hydrocarbon oils such as hexane, cyclohexane, isododecane, benzene, toluene, poly-α-olefins, and liquid paraffin; ethers such as tetrahydrofuran; halogenated hydrocarbons such as carbon tetrachloride and chlorobenzene; petroleum components such as kerosene, gasoline, diesel, and heavy oil; silicone oils such as dimethylpolysiloxane and methylphenylpolysiloxane; ester oils such as octyldodecyl oleate, cetyl ethylhexanoate, glyceryl triisooctanoate, and neopentyl glycol diisooctanoate; higher alcohols such as hexadecyl alcohol and oleyl alcohol; higher fatty acids such as lauric acid, isostearic acid, and oleic acid; aromatic carboxylic acids, and pyridine.

Examples of the solvent having a high Raman activity include N,N-dimethylformamide (DMF), dimethyl sulfoxide (DMSO), dimethylacetamide (DMAA), N-methylpyrrolidone (NMP), tetrahydrofuran (THF), cyclohexanone, lactam, lactone, and N,N,N,N-tetramethylurea. When using the solvent, the amount used (or the total amount when two or more types of solvents are used in combination) with respect to the total amount of the viscous liquid contained in the surface-enhanced Raman scattering agent is, for example, preferably 30 wt.% or less, more preferably 20 wt.% or less, particularly preferably 10 wt.% or less, most preferably 5 wt.% or less, and especially preferably 1 wt.% or less.

### Thickener

When the viscosity of the solvent is low, a thickener may be added to increase the viscosity. The thickener can be selected, as appropriate, depending on the type of the solvent.

When the solvent is a water-soluble solvent, examples of the thickener include: cellulose-based polymer compounds such as hydroxyethyl cellulose, methyl cellulose, ethyl cellulose, and carboxymethyl cellulose; plant-based natural polymer compounds such as carrageenan and guar gum; microbial natural polymer compounds such as xanthan gum; animal-based natural polymer compounds such as casein and gelatin; starch-based polymer compounds such as carboxymethyl starch; vinyl-based polymer compounds such as polyvinyl alcohol, polyvinylpyrrolidone, sodium polyacrylate, and carboxy vinyl polymer; polyether-based polymer compounds such as polyethylene glycol, polypropylene glycol, and polyglycerin; and polyoxyalkylene-modified saccharides such as polyoxyethylene methyl glucoside and polyoxypropylene methyl glucoside.

When the solvent is an oil-based solvent, examples of the thickener include sugar fatty acid esters, 12-hydroxystearic acid, 1,3;2,4-dibenzylidene-D-sorbitol, N-lauroyl-L-glutamic acid-α,γ-bis-n-butylamide, benzene fatty acid amides, and cyclohexane fatty acid amides. Examples of the sugar fatty acid esters include: dextrin fatty acid esters such as dextrin palmitate and dextrin myristate; and inulin fatty acid esters such as stearoyl inulin.

### Surface-enhanced Raman scattering measurement method

A surface-enhanced Raman scattering measurement method according to an embodiment of the present disclosure is a measurement method by surface-enhanced Raman scattering spectroscopy using the surface-enhanced Raman scattering agent. More specifically, the surface-enhanced Raman scattering measurement method according to an embodiment of the present disclosure is a method for identifying and quantifying a substance contained in a test specimen by analyzing scattered light generated by irradiating the test specimen with excitation light, the test specimen being obtained by bringing the surface-enhanced Raman scattering agent into contact with a specimen.

The method for bringing the surface-enhanced Raman scattering agent into contact with a specimen is not limited as long as the specimen can be brought into contact with the surfaces of the noble metal-supporting flakes in the surface-enhanced Raman scattering agent. Examples of the method include a method of immobilizing the surface-enhanced Raman scattering agent to the surface of a substrate and adding a liquid specimen (or a specimen prepared into a liquid state when the specimen is not liquid) dropwise on the surface of the substrate, and a method of mixing the surface-enhanced Raman scattering agent and a liquid specimen on a sample stage or the like.

### Method for determination of equol

The method for determination of equol is a method for determining (identifying and/or quantifying) equol contained in a specimen by using the surface-enhanced Raman scattering measurement method. More specifically, the method for determination of equol is a method for quantifying equol contained in a test specimen by analyzing scattered light generated when the test specimen is irradiated with excitation light, the test specimen being obtained by bringing the surface-enhanced Raman scattering agent into contact with a specimen.

The method for determination of equol can selectively quantify equol in a specimen containing a mixture of equol and an equol-like substance by analyzing a characteristic peak of equol, that is, a peak that appears for equol but not for an equol-like substance.

The characteristic peak of equol may shift slightly depending on the experimental conditions such as the measuring instrument used. Examples of the characteristic peak of equol include a peak found in at least one wavenumber region (that is, a peak having the peak position in the wavenumber region) selected from the group consisted of from 1530 to 1630 cm⁻¹, from 1230 to 1330 cm⁻¹, from 1140 to 1240 cm⁻¹, and from 535 to 635 cm⁻¹, preferably a peak found in at least one wavenumber region selected from the group consisted of from 1570 to 1590 cm⁻¹, from 1270 to 1290 cm⁻¹, from 1180 to 1200 cm⁻¹, and from 570 to 590 cm⁻¹.

According to the method for determination of equol, the surface-enhanced Raman scattering agent is used to amplify Raman scattering of equol contained in a specimen, thus enabling selective and highly sensitive determination of equol.

### Method for testing equol-producing ability

The method for testing equol-producing ability is a method for testing whether a subject has the ability to produce equol, and the method for testing equol-producing ability includes determining equol in a specimen collected from a subject by using the method for determination of equol.

In a case in which a subject has equol-producing ability, the subject has equol-producing bacteria in the intestine. When the subject ingests daidzein, which is a type of isoflavone, the equol-producing bacteria metabolize daidzein to produce equol. The produced equol is absorbed by the intestinal tract and taken into the blood, and a part of the equol taken into the blood is excreted into the urine. As such, by quantifying equol contained in a specimen that is urine, blood, intestinal contents, or a supernatant obtained by subjecting urine, blood, or intestinal contents to centrifugation, it is possible to easily determine whether a subject has equol-producing ability (or whether a subject has equol-producing bacteria).

Examples of the equol-producing bacteria include microorganisms belonging to the genera Lactococcus, Slackia, Adlercreutzia, Asaccharobacter, and Eggerthella. More specific examples include *Lactococcus garvieae, Adlercreutzia equolifaciens, Asaccharobacter celatus*, and *Eggerthella sp.* YY7918.

The method for testing equol-producing ability determines equol selectively and with high sensitivity using the above-described method for determination of equol, and thus the presence of equol-producing ability or the presence of equol-producing bacteria can be determined with high accuracy.

### Surface-enhanced Raman scattering measurement kit

A surface-enhanced Raman scattering measurement kit according to an embodiment of the present disclosure is a kit for performing measurement using surface-enhanced Raman scattering spectroscopy, the kit including at least the surface-enhanced Raman scattering agent.

The kit may include other configurations in addition to the surface-enhanced Raman scattering agent, and preferably includes a device capable of identifying a Raman peak. The device is preferably a Raman spectroscopy device (for example, one including a light source, a filter for removing Rayleigh scattered light, a spectrometer for dispersing Raman scattered light into a spectrum, a detector, and the like).

The light source is preferably, for example, a light source that emits laser beam (preferably, near-infrared laser beam).

Examples of methods for using the measurement kit include the following methods.
1. The surface-enhanced Raman scattering agent is brought into contact with a specimen, resulting in a test specimen.
2. The test specimen is irradiated with light from a light source to generate Raman scattered light and Rayleigh scattered light.
3. The scattered light is passed through a filter to remove the Rayleigh scattered light.
4. The scattered light from which the Rayleigh scattered light has been removed is introduced into a spectrometer, and the introduced scattered light is dispersed into a spectrum in the spectrometer.
5. The spectrum is detected with a detector.

The light source is preferably, for example, a light source that emits laser beam (preferably, near-infrared laser beam).

When the measurement kit is used, Raman scattering of an analyte can be amplified by the surface-enhanced Raman scattering agent. As such, a trace amount of the analyte can be quantified.

In addition, by using the measurement kit, equol can be identified and/or quantified selectively and with high sensitivity. As such, the measurement kit may be, for example, an equol measurement kit.

Furthermore, when the measurement kit is used to identify and/or quantify equol using, as a specimen, a subject's urine, blood, or intestinal contents, or the supernatant of a subject's urine, blood, or intestinal contents, it is possible to easily determine whether the subject has equol-producing ability. Therefore, the measurement kit may be a kit for testing equol-producing ability.

Each of the configurations, their combinations, and the like of the present disclosure above is an example, and addition, omission, substitution, and change of the configuration can be appropriately made without departing from the gist of the present disclosure. In addition, the present disclosure is not limited by the embodiments and is limited only by the claims.

### Examples

Hereinafter, the present disclosure will be described more specifically with reference to examples, but the present disclosure is not limited by these examples.

### Preparation Example 1 (Preparation of structure including nanorods standing close together and having transparent layer/noble metal layer stacked structure)

A surface-enhanced Raman scattering substrate, which is a structure including nanorods standing close together and having an anisotropic shape and having a transparent layer/noble metal layer stacked structure, was produced by glancing angle deposition described in JP 4783907 B. Specifically, the surface-enhanced Raman scattering substrate was prepared by the following method.

A mica substrate cut into a size of 50 × 50 mm² was cleaved to a thickness of from 15 to 30 µm, which is enough to maintain the shape of the mica substrate. The cleaved mica substrate was subjected to ultraviolet light cleaning, resulting in a mica sheet.

Thereafter, the mica sheet was mounted on a glancing angle deposition apparatus, and the apparatus was evacuated until the pressure became 3 × 10⁻⁴ Pa or less. Then, an Ag mirror surface layer, a SiO₂ nanorod layer, and an Ag layer were formed in this order.

First, silver was vapor-deposited to a film thickness of 200 nm at a deposition angle of 0° and an average deposition rate of approximately 0.20 nm/s, resulting in an Ag mirror surface layer.

Next, particles of silica (SiO₂) with a purity of 99.99% were vapor-deposited on the Ag mirror surface layer to a film thickness of 105 nm at a deposition angle of 0° and an average deposition rate of from 0.2 to 0.3 nm/s. Then, using continuous bidirectional glancing angle deposition, which is a type of glancing angle deposition, a SiO₂ nanorod layer was fabricated. In the continuous bidirectional glancing angle deposition, the mica sheet was rapidly rotated by 180° every time the particles of silica were vapor-deposited to a film thickness of 20 nm at a deposition angle of approximately 82°, then the particles of silica was further vapor-deposited to a film thickness of 20 nm, and this flipping of the mica sheet was repeated 30 times.

Finally, silver was deposited by electron beam vapor deposition on the SiO₂ nanorod layer at a deposition angle of 70° and an average deposition rate of 0.20 nm/s, resulting in an Ag layer having an average thickness of approximately 8 nm.

This resulted in a structure which includes the mica sheet provided with the Ag mirror surface layer, and nanorods standing close together on a surface of the Ag mirror surface layer, where the nanorods each include the SiO₂ layer, and the noble metal layer disposed on the SiO₂ layer.

### Example 1 (Preparation of noble metal-supporting flakes dispersed in viscous liquid)

Ultrapure water and hydroxyethyl cellulose (HEC) powder (SE400, Daicel FineChem Ltd.) were placed in a 30 mm container with a lid and mixed with a mixer for 2 minutes. The rotation speed during mixing was 2000 rpm for revolution and 800 rpm for rotation. The HEC concentration was 10 wt.%. This resulted in a viscous liquid. Note that, the viscosity of the viscous liquid, which was measured using a rheometer (trade name "Physica MCR301", available from Anton Paar) under the conditions of a temperature of 25°C and a shear rate of 10 (1/s), was approximately 104 Pa·s.

1.0 g of the resulting viscous liquid was placed in a container with a lid, the container having a bottom diameter of 30 mm and a volume of 12 mL. Next, 9.0 cm² of the structure prepared in Preparation Example 1 was cut into approximately 5 mm pieces and placed in the container with the side of the mica sheet being in contact with the viscous liquid. Furthermore, stainless steel balls (SUS balls) with a diameter of 1.0 mm were added, and mixing was performed, resulting in a dispersion. Note that, the mixing was carried out by fixing the rotation speed at 2000 rpm for revolution and 800 rpm for rotation and changing the mixing time every minute up to 10 minutes.

Under these conditions, it was found that a gelatinous dispersion, in which flakes of the structure were dispersed in the viscous liquid, was prepared at the mixing time of from 4 to 6 minutes.

### Example 2 (Measurement of surface-enhanced Raman scattering)

The gelatinous dispersion 1 obtained at the mixing time of 5 minutes in Example 1 was subjected to the following surface-enhanced Raman scattering measurement.

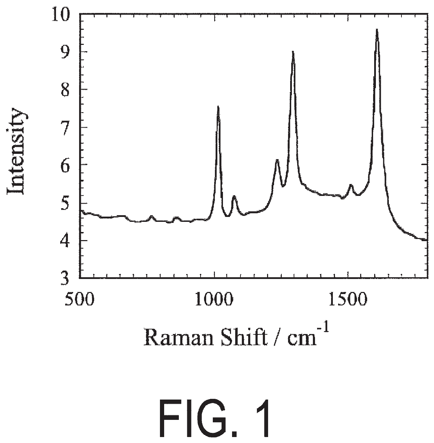

A 5 × 5 mm² hole was provided in a silicon rubber with a thickness of 1.5 mm to prepare a cell for containing the gelatinous dispersion 1. Then, 30 µL of a 1 mM 4,4'-bipyridine aqueous solution was added dropwise from above the gelatinous dispersion 1, and a cover glass was placed thereon. After 60 minutes, the cell was placed at the measurement site of a Raman spectrometer RAM 200 which is available from Lambda Vision Inc., irradiated with a 785 nm (100 mW) laser for 1 second, and averaged twice to generate a Raman scattering spectrum (FIG. 1). FIG. 1 illustrates a typical surface-enhanced Raman scattering spectrum of 4,4'-bipyridine.

From the above, it was confirmed that the gelatinous dispersion 1 prepared in Example 1 had excellent surface-enhanced Raman scattering effect.

### Example 3

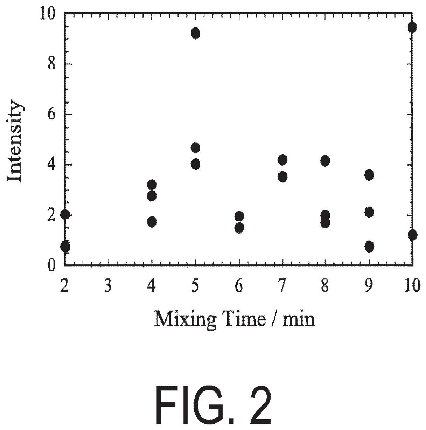

Measurement of surface-enhanced Raman scattering was performed in the same manner as in Example 2 except that the dispersions used were prepared by changing the mixing time to a time within the range of from 1 minute to 10 minutes, resulting in Raman scattering spectra. The peak heights around 1600 cm⁻¹ as a function of the mixing times of the dispersions were plotted (FIG. 2).

As can be seen from FIG. 2, the strongest surface-enhanced Raman scattering effect was achieved when the dispersion used was prepared at 5 minutes of mixing time.

### Comparative Example 1

Colloidal gold was coagulated by adding salt and immediately dispersed in a 10 wt.% viscous liquid of HEC. Note that, the dispersion was carried out by mixing in the same procedures as in Example 1. This resulted in a gelatinous dispersion 3.

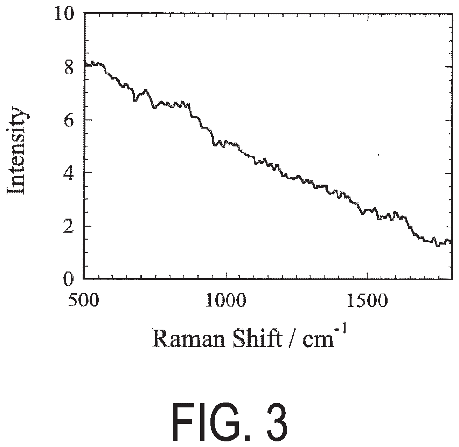

A Raman scattering spectrum of 4,4'-bipyridine was generated in the same manner as in Example 2 except that the gelatinous dispersion 3 was used instead of the gelatinous dispersion 1 (FIG. 3).

As can be seen from FIG. 3, the characteristic peak of 4,4'-bipyridine was not confirmed even when a gelatinous dispersion containing colloidal gold was used.

As a summary of the above, configurations and variations of the present disclosure are described below.
[1] A surface-enhanced Raman scattering agent having a configuration in which noble metal-supporting flakes are dispersed in a viscous liquid, wherein
   the viscous liquid has a viscosity of 50 mPa·s or greater at 25°C and a shear rate of 10 (1/s).
[2] A surface-enhanced Raman scattering agent having a configuration in which noble metal-supporting flakes are dispersed in a gelatinous dispersion.
[3] The surface-enhanced Raman scattering agent according to [1] or [2], wherein the noble metal is gold, silver, or copper.
[4] The surface-enhanced Raman scattering agent according to any one of [1] to [3], wherein the noble metal-supporting flakes is a structure including:
   a flake; and
   nanorods standing close together on a surface of the flake, where at least a part of the nanorods comprises a noble metal layer or a noble metal particle.
[5] The surface-enhanced Raman scattering agent according to any one of [1] to [4], wherein the noble metal-supporting flakes is a structure including:
   a flake; and
   nanorods standing close together on a surface of the flake, where at least a part of the nanorods comprises a noble metal layer.
[6] The surface-enhanced Raman scattering agent according to any one of [1] to [5], wherein the noble metal-supporting flakes are each a structure including a flake having a noble metal layer on a surface thereof, where, on a surface of the noble metal layer, nanorods having a noble metal layer stand close together.
[7] The surface-enhanced Raman scattering agent according to any one of [1] to [6], wherein the noble metal-supporting flakes are each a structure including a flake and nanorods, where the nanorods each exhibit an anisotropic shape and stand close together while being oriented in one direction on a surface of the flake.
[8] The surface-enhanced Raman scattering agent according to any one of [1] to [7], wherein the noble metal-supporting flakes are each a structure including a flake and nanorods standing close together on a surface of the flake, where the nanorods each have a transparent layer composed of a substance other than noble metals, and a noble metal layer.
[9] The surface-enhanced Raman scattering agent according to any one of [1] to [8], wherein the noble metal-supporting flakes are each a structure including a flake, and nanorods standing close together on a surface of the flake, where the nanorods have a layer composed of at least one selected from SiO₂, Ta₂O₅, TiO₂, and LiF, and a noble metal layer.
[10] The surface-enhanced Raman scattering agent according to any one of claims 1 to 3, wherein the flakes are made of an inorganic oxide having a hydroxyl group. The surface-enhanced Raman scattering agent according to any one of [1] to [9].
[11] The surface-enhanced Raman scattering agent according to any one of [1] to [10], wherein the flakes are glass flakes, silica flakes, talc flakes, mica flakes, or titanium oxide flakes.
[12] The surface-enhanced Raman scattering agent according to any one of [1] to [11], wherein the flakes have an average thickness of from 10 to 50 µm.
[13] The surface-enhanced Raman scattering agent according to any one of [1] to [12], wherein the flakes have an average value of circle equivalent diameters of from 10 to 500 µm as measured by an image analysis method.
[14] A surface-enhanced Raman scattering measurement kit including the surface-enhanced Raman scattering agent described in any one of [1] to [13].
[15] A surface-enhanced Raman scattering measurement method, the method including performing surface-enhanced Raman scattering measurement using the surface-enhanced Raman scattering agent described in any one of [1] to [13].
[16] A method for producing the surface-enhanced Raman scattering agent described in any one of [1] to [13], the method including pulverizing a noble metal-supporting sheet in a viscous liquid having a viscosity of 50 mPa·s or greater at 25°C and a shear rate of 10 (1/s).

### Industrial Applicability

When the surface-enhanced Raman scattering agent according to an embodiment of the present disclosure is used, a characteristic Raman peak of equol can be recognized with high sensitivity. As such, the surface-enhanced Raman scattering agent is suitable as a surface-enhanced Raman scattering agent for quantifying equol.

## Claims

1. A surface-enhanced Raman scattering agent comprising
a viscous liquid having a viscosity of 50 mPa·s or greater at 25°C and a shear rate of 10 (1/s), and
noble metal-supporting flakes dispersed in the viscous liquid.

2. The surface-enhanced Raman scattering agent according to claim 1, wherein the noble metal is gold, silver, or copper.

3. The surface-enhanced Raman scattering agent according to claim 1 or 2, wherein each of the noble metal-supporting flakes is a structure including:
a flake; and
nanorods standing close together on a surface of the flake, where at least a part of the nanorods comprises a noble metal layer or a noble metal particle.

4. The surface-enhanced Raman scattering agent according to any one of claims 1 to 3, wherein the flakes are flakes made of an inorganic oxide having a hydroxyl group.

5. The surface-enhanced Raman scattering agent according to any one of claims 1 to 3, wherein the flakes are glass flakes, silica flakes, talc flakes, mica flakes, or titanium oxide flakes.

6. The surface-enhanced Raman scattering agent according to any one of claims 1 to 5, wherein the flakes have an average value of circle equivalent diameters of from 10 to 500 µm as measured by an image analysis method.

7. The surface-enhanced Raman scattering agent according to any one of claims 1 to 6, wherein the flakes are mica flakes.

8. The surface-enhanced Raman scattering agent according to any one of claims 1 to 7, wherein each of the noble metal-supporting flakes is a structure including:
a flake; and
nanorods standing close together on a surface of the flake, where at least a part of the nanorods comprises a noble metal layer and a layer including at least one selected from SiO2, Ta2O5, TiO2, and LiF.

9. The surface-enhanced Raman scattering agent according to any one of claims 1 to 8, wherein each of the noble metal-supporting flakes is a structure including:
a flake; and
nanorods standing close together on a surface of the flake, where at least a part of the nanorods comprises a noble metal layer or a noble metal particle, and
the nanorods have a ratio of a length in a longitudinal direction to a length in a widthwise direction of a cross session, created by cutting a nanorod along a plane substantially parallel to the flake, of 2 or more.

10. A surface-enhanced Raman scattering measurement kit comprising the surface-enhanced Raman scattering agent described in any one of claims 1 to 9.

11. A surface-enhanced Raman scattering measurement method, the method comprising performing surface-enhanced Raman scattering measurement using the surface-enhanced Raman scattering agent described in any one of claims 1 to 9.

12. A method for producing the surface-enhanced Raman scattering agent described in any one of claims 1 to 9, the method comprising
pulverizing a noble metal-supporting sheet in a viscous liquid having a viscosity of 50 mPa·s or greater at 25°C and a shear rate of 10 (1/s).
